# FASCICULE DE BREVET EUROPEEN

(11) **EP 1 443 838 B1**
(45) Date de publication et mention de la délivrance du brevet: **21.12.2005**
(21) Numéro de dépôt: 02777618.6
(22) Date de dépôt: 22.10.2002
(51) Int. Cl.: A47J 39/00

(54) **DISPOSITIF DE REMISE EN TEMPERATURE D'ALIMENTS A DOUBLE CIRCUIT DE FLUIDE D'ACCUMULATION DE CHAUD ET DE FROID**
VORRICHTUNG ZUR ERWÄRMUNG VON LEBENSMITTELN MIT DOPPELTEM FLÜSSIGKEITSKREISLAUF ZUR SPEICHERUNG VON WÄRME UND KÄLTE
DEVICE FOR FOOD RETHERMALIZATION WITH DUAL HOT AND COLD STORAGE FLUID CIRCUIT

(30) Priorité: 23.10.2001 FR 0113694
(43) Date de publication de la demande: 11.08.2004
(73) Titulaire: Italinnova S.A.S., 22060 Campione d'Italia (IT)
(72) Inventeur: GRANDI, René, Vincent, I-22060 Campione d'Italia (IT)
(74) Mandataire: Thibault, Jean-Marc
(86) Numéro de dépôt international: PCT/IB2002/004359
(87) Numéro de publication internationale: WO 2003/034882

(56) Documents cités:
- WO-A-00/54641
- FR-A- 2 755 359
- US-A- 3 999 601
- US-A- 5 201 364
- US-A- 5 404 935

## Description

L'invention est relative à un dispositif de remise en température d'aliments à double circuit de fluide chaud et froid pour intallation de conservation froide de plateaux repas ou de mets sur récipients.

Elle concerne, entre autres, les installations recevant des plateaux porte repas associés ou non à un couvercle et dans lesquels les récipients contenant les mets sont disposés sur des zones du plateau définies comme restant froides ou réchaufables.

Elle concerne aussi les installations comprenant une enceinte avec deux compartiments superposés et isolés thermiquement l'un de l'autre et, éventuellemnt de de l'extérieur, à savoir un compartiment supérieur formant réserve de froid et un compartiment inférieur de conservation muni d'étagères de réception de récipients ou plateaux repas, et dans laquelle ce compartiment est divisé en une zone froide, assurant exclusivement la conservation par le froid, et une zone mixte apte à assurer successivement la conservation par le froid et le réchauffage des aliments, la zone froide comportant un réseau de conduits aboutissant sous certaines étagères et relié par un circuit indépendant à la réserve de froid, tandis que la zone mixte comprend deux réseaux aboutissant sous d'autres étagères et associés, l'un à la reserve de froid, l'autre à des moyens de réchauffage électriques, le réseau froid étant équipé d'une vanne se fermant lors du passage en phase de réchauffage.

Le document WO 98/53260, au nom de la déposante, décrit une installation dans laquelle les réseaux froids comprennent des caloducs reliés à la réserve de froid. Cette installation se différencie de celle décrite dans les documents US-A-5 201 364, US-A-5 421 246 et WO 94/13184 dans lesquels le même circuit alimentant toutes les étagères peut être connecté, selon les besoins, soit à une source de fluide froid, soit à une source de fluide chaud, pour assurer soit la fonction de conservation, soit la fonction chauffage, sans aucune possibilité de disposer simultanément d'une zone froide et d'une zone chaude, par exemple sur le même plateau repas.

Dans une installation avec remise en température, si la transmission du froid entre les étagères et les récipients contenant les mets ne pose pas de grand problème, ne serait-ce qu'en raison du temps de conservation froide plus grand que le temps de remise en température, il n'en est pas de même pour la transmission de la chaleur. En effet, celle-ci doit être progressive et uniforme pour porter les récipients et leur contenu à la température optimale de consommation, sans zone plus chaude pouvant localement brûler et ou faire attacher le contenu sur le fond du récipient, tout en étant localisée pour éviter de réchauffer inutilement les autres récipients devant rester en conservation froide pendant le temps de chauffage.

Ces contraintes empêchent d'utiliser des résistances électriques disposées sous les récipients, car celles ci fournissent une chaleur trop vive et non uniforme, même si ces résistances chauffent, par conduction, une plaque de répartition recevant le fond du récipient.

Pour remédier à cela, il a été envisagé, comme décrit dans WO 98/53260 au nom de la déposante, d'utiliser les conduits du réseau caloduc de chacune des zones mixtes des étagères comme conducteur thermique pour véhiculer la chaleur générée par un ou plusieurs colliers chauffants. Il s'avère que l'utilisation d'un réseau de refroidissement pour apporter temporairement de la chaleur présente des inconvénients en raison des trop grandes variations de températures affectant les composants du réseau, à savoir conduits et fluide caloporteur. Il en serait d'ailleurs de même si l'on transposait, dans la zone mixte, le serpentin de circulation d'un mélange eau-glycol décrit dans une forme d'exécution de WO 94/13184.

La présente invention a pour objet de fournir un dispositif de remise en température permettant d'obtenir, dans la zone mixte et en relation avec le fond d'au moins un récipient, une chaleur progressive, homogène et localisée.

A cet effet, dans le dispositif selon l'invention, le circuit de remise en température des zones mixtes est rempli d'huile thermique et comprend un répartiteur vertical dont la partie supérieure est munie d'un vase d'expansion et dont la partie inférieure est associée aux moyens de chauffage électrique, tandis que le circuit de maintien en froid est rempli par un mélange aqueux, de glycol ou autre fluide caloporteur équivalent, et comprend une réserve, disposée dans le compartiment supérieur et contenant l'évaporateur d'une installation frigorifique, cette réserve communiquant avec le circuit d'alimentation des réseaux froids des platines mixtes par un circuit équipé de l'électrovanne d'arret, électrovanne se fermant en phase de remise en température sous la commande d'un boitier de régulation et de contrôle.

Pour la remise en température l'électrovanne est fermée simultanément à l'alimentation des moyens de chauffage électrique. La montée en température de l'huile thermique contenue dans le réseau s'effectue progressivement jusqu'à une température optimale déterminée et se répartit, de manière homogène, au récipient.

De préférence, les moyens de chauffage du circuit de remise en température sont constitués par un collier électrique chauffant entourant un tronçon inférieur du répartiteur, ou par des résistances électriques noyées dans de l'huile thermique chauffante et ce circuit est associé à une pompe de circulation ne fonctionnant que lors de la remise en température.

La puissance fournie par le collier chauffant ou par les résistances dans l'huile thermique est suffisante pour, en combinaison avec la pompe, porter le fluide thermique à une température homogène. De plus, ce moyen de chauffage procure une réchauffage progressif favorisant l'adaptation aux variations thermiqueses des composants des réseaux froids et chauds.

Dans une forme d'exécution, par exemple pour les armoires ou chariots de conservation de plateaux repas, chaque étagère de réception d'un plateau repas est composée de deux platines indépendantes, dont l'une est dite froide et l'autre dite mixte, réalisées en matériau conducteur de la chaleur et supportées par des structures indépendantes et non conductrices de la chaleur, chaque platine mixte comprenant une paroi supérieure et une paroi inférieure séparées par une épaisse couche de matériau d'isolation thermique, la dite couche séparant également, d'une part, la boucle d'un réseau tubulaire inférieur rélié au circuit de refroidissement et disposé au contact de la paroi inférieure de la platine et près de sa périphérie, et d'autre part, la boucle d'un réseau tubulaire de remise en température par un fluide caloporteur, réseau disposé au contact de la paroi supérieure de la platine et dans sa partie centrale, tandis que la platine froide voisine comporte, contre la face inférieure de son unique paroi, une boucle formée par un réseau tubulaire relié au circuit de refroidissement.

Avec ce dispositif, la conservation froide dans la zone mixte s'effectue par rayonnement vers le bas à partir de la paroi inférieure de la platine disposée au-dessus d'un plateau-repas et , dans la zone froide, par conductivité et rayonnement à partir de la platine disposée sous le plateau-repas. Dans la zone mixte la remise en température s'effectue par conductivité et rayonnement à partir de la plaltine portant le plateau-repas. La chaleur ainsi transmise à la paroi supérieure de la platine mixte se répartit, de manière homogène, sous le fond du récipient, ce qui évite tous risque de chauffage excessif localisé. La couche d'isolant entre les deux parois de la platine mixte s'oppose à la transmission de cette chaleur au réseau de refroidissement sous-jacent. Enfin, par sa séparation de la platine froide juxtaposée assurant la seule conservation froide, la platine mixte ne risque pas de transmettre de la chaleur à cette platine, ce qui garantit le maintien en conservation froide des autres aliments du plateau repas.

Aventageusement, chaque plateau est en matériau isolant thermiquement et comporte, dans son fond, des plots en matériau conducteur de la chaleur mettant en communication thermique le fond des récipients contenant les mets avec la paroi de la platinesur laquell il repose.

Cet aménagement améliore les transferts de calories entre,d'une part, les platines, mixtes et froides, et, d'autre part, les récipients et supprime les risques de déperdition à travers la paroi du plateau.

Dans une autre forme d'exécution, et par exemple pour un chariot traiteur pour service àl'assiette, les étagères du compartiment de conservation sont réparties en colonnes, respectivement, froide et mixte, séparées par une cloison isolante et chacune des étagères de la colonne mixte comprend une ou plusieurs boucles formées par les conduits d'un réseau tubulaire intérieur, relié au circuit de refroidissement, et une ou plusieurs boucles extérieures, entourant les premières boucles et faisant partie d'un réseau tubulaire de remise en température, ces boucles venant directement en contact avec les assiettes.

D'autres caractéristiques et avantages ressortiront de la description qui suit en référence au dessin schématique annexé représentant, à titre d'exemple, deux formes d'exécution du dispositif dans le cas de son application à une armoire de conservation et de distribution des plateaux repas et à un chariot traiteur de conservation d'assiettes pretes à servir.liments .
Figure 1 en est une vue en coupe verticale d'une armoire de conservation; combinée avec un schéma des divers circuits, repectivement, chaud et froid;
Figure 2 est une vue en coupe transversale, montrant par dessous une étagère de larmoire de figure 1, assurant la conservation de deux colonnes de plateaux-repas;
Figure 3 est une vue en coupe transversale montrant à échelle aggrandie une forme d'éxécution d'une platine mixte;
Figure 4est une vue partielle en coupe montrant, à une échelle encore plus grandie, une forme d'éxécution d'un plateau-repas,
Figure 5 est une vue en perspective d'un chariot traiteur pour le service à l'assiette.
Figures 6 et 7 représentent une vue d'ensemble et en coupe verticale d'une armoire de conservation mobile, avec pour chacune des figures une vue de côté différente, laissant apercevoir une double capacité de plateaux-repas.

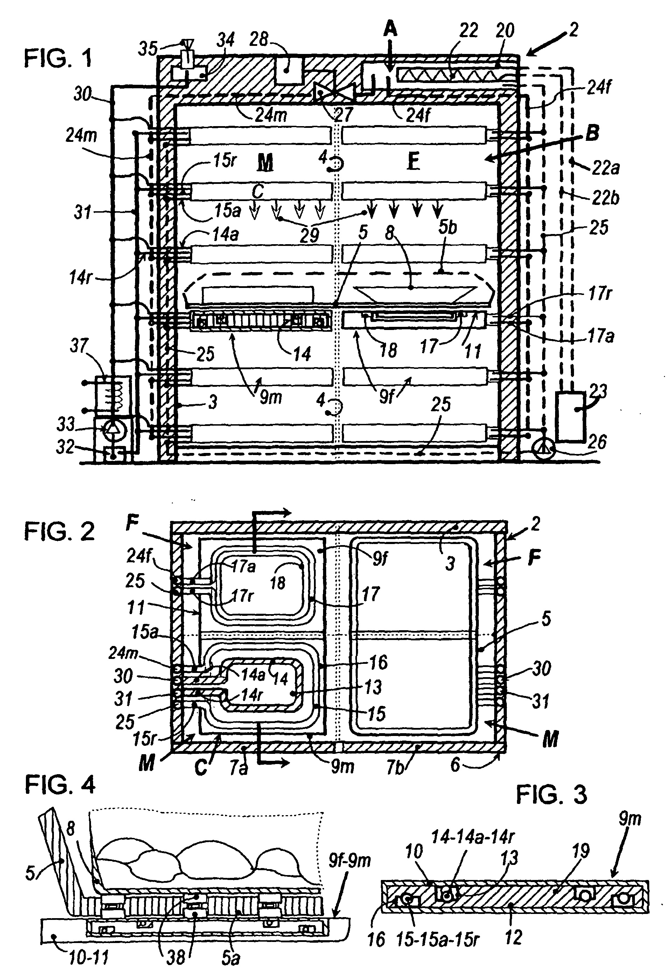

Aux figures 1 et 2, la référence numérique 2 désigne, de manière générale, une armoire de conservation comportant des parois isolantes, respectivement, extérieures 3 et intermédiaire 4, divisant son enceinte en un compartiment supérieur A, formant réserve de froid, et un compartiment inférieur B, dit de conservation.

De façon connue, le compartiment de conservation B est muni d'étagères superposées C aptes, chacune, à recevoir un plateau repas 5, associé ou non à un couvercle 5b, isolant ou non.

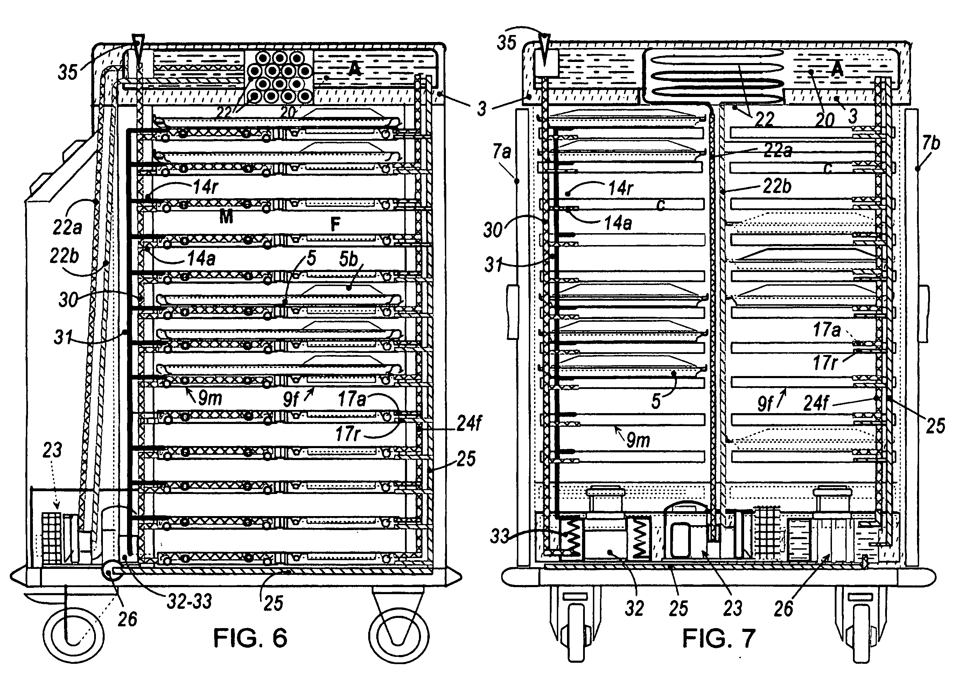

S'agissant, dans la forme d'exécution représentée, d'une armoire de conservation de deux colonnes juxtaposées de plateaux-repas superposés, le compartiment de conservation B comporte, comme montré figures 2 et 7 une ouverture frontale 6 permettant la mise en place et le retrait des plateaux 5 . Cette ouverture frontale 6 peut être fermée par deux portes 7a et 7b, également réalisées dans un panneau en matériau isolant.

L'armoire représentée étant plus particulièrement destinée à assurer, à la fois, la conservation froide et la remise en température de récipients 8 de chaque plateau-repas, chacune de ses étagères C est divisée en une zone froide F, assurant esclusivement la conservation par le froid, et en une zone mixte M, pouvant assurer la conservation par le froid ou le réchauffage.

En pratique, chacune des étagères des zones F et M sont définies par des platines indépendantes, respectivement froide 9f et mixte 9m, de forme générale rectangulaire et supportées par des structures indépendantes en matériau non conducteur de la chaleur. Chaque platine 9f et 9m est réalisée en matériau conducteur de la chaleur et par exemple en aluminium.

Comme montré figures 2 ou 3, chaque platine mixte 9m comprend une paroi plane supérieure 10 et une paroi inférieure 12. De la face inférieure de la paroi supérieure 10 fait saillie vers le bas, une gouttière centrale 13 dans laquelle est au moins partiellement noyé un conduit 14, formant une boucle et sortant de la platine par deux tronçons de conduit 14a et 14r (figure 1). La platine 9m comprend également, en saillie vers le haut à partir de sa paroi inférieure 12, une gouttière de bordure 16 pour un conduit 15 formant une boucle contre sa face supérieure et sortant hors de la platine par deux tronçons 15a et 15r. Le conduit 14 définit un réseau tubulaire de réchauffage tandis que celui 15 définit un réseau de refroidissement. Dans chaque platine mixte ces deux réseaux sont séparés par une couche 19 d'un matériau d'isolation thermique.

Comme montré figure 1 et 2, chaque platine froide 9f ne comprend qu'une paroi supérieure 11 qui est identique à la paroi 10 et comporte comme elle, en saillie de sa face inférieure, une gouttière centrale 18 accueillant le conduit en boucle 17 d'un réseau tubulaire de refroidissement solidaire de tronçons 17a et 17r sortant de la platine.

Bien entendu, les conduits 14, 15, et 17 sont disposés dans leur gouttière respective : 13, 16, 18 de manière à être en parfait contact avec elle, pour transmettre à la platine correspondante et par conduction, les calories du fluide qui les parcourt.

Les divers conduits sont raccordés aux différentes branches aller et retour de deux circuits, respectivement, de maintien par le froid et de remise en température équipant l'armoire.

Comme montré figure 1, le circuit de froid comprend, dans le compartiment supérieur A de l'armoire, une réserve 20 contenant un fluide caloporteur, tel qu'un mélange aqueux de glycol, et l'évaporateur 22 d'un groupe frigorifique 23, reliés entre eux par les conduits 22a et 22b. De la réserve 20 partent les branches 24f et 24m de ce circuit de refroidissement, branches allant aux platines, respectivement, froides 9f et mixtes 9m. La branche 24f est raccordée aux troncons 17a des réseaux 17, dont les tronçons 17r sont raccordés à une branche de retour 25 avec pompe électrique 26 renvoyant le fluide à la réserve 20. La branche 24m est raccordée aux tronçons 15a des réseaux 15 dont les tronçons 15r sont raccordés au même circuit de retour 25. A la différence de la branche 24f, celle 24m est équipée d'une électrovanne 27 pilotée par un boitier de régulation et de contrôle 28

Les tronçons14a du circuit de remise en température sont alimentés par un collecteur vertical 30 contenant un fluide caloporteur, tel qu'une huile thermique, et s'étendant entre un réservoir inférieur 32, avec pompe de circulation 33 et un vase d'expansion 34, avec soupape de sécurité 35. Les tronçons 14r sont raccordés à une branche de retour 31 revenant au réservoir 32. Le chauffage du fluide caloporteur est assuré par un collier électrique chauffant 37, ou par immersion de résistances dans de l'huile thermique chauffée dont l'alimentation et sous le contrôle du boitier de régulation 28.

Certains conduits, et au moins les collecteurs 30, 31 assurant la remise en température, sont noyés dans les parois 3 de l'enceinte isolante, mais il est évident que, selon les conditions de fabrication et les contraintes dimensionnelles, tous les conduits peuvent être soit noyés, soit plaqués aux parois et calorifugés.

Dans la forme d'éxécution représentée figure 4, chaque plateau repas 5 est en matériau isolant thermique et comporte, dans son fond 5a, des plots 38 en matériau conducteur de la chaleur, et par exemple en aluminium. Chaque plot est plus épais que le fond 5a dans lequel il est noyé de manière à dépasser de sa face supérieure et de sa face inférieure pour assurer une bonne communication thermique entre la platine 9f ou 9m et le fond des récipients 8, contenant les mets et réalisés en matériau conducteur de la chaleur.

De façon connue, lorsque l'armoire est en phase de conservation froide, les deux zones M et F de ses étagères assurent, par les platines 9f et 9m, le maintien en température froide des mets contenus dans les récipients.

Avec les platines 9f, la diffusion thermique vers les récipients 8 s'effectue par conduction à travers le fond 5a du plateau-repas 5 ou par les plots 38, s'il en a, tandis que, avec les platines mixtes 9m, la diffusion s'éffectue par rayonnement 29 (figure 1) vers le bas en direction du plateau-repas sous jacent.
Pour assurer le refroidissement du plateau-repas qui est le plus haut dans une colonne de plateaux, la colonne comporte au dessus du plateau le plus haut et dans chaque zone froide ou mixte une platine froide 9f n'assurant que la transmission du froid. De façon inverse la platine mixte 9m recevant le plateau-repas le plus bas, est organisée pour n'assurer que la remise en température du plateau-repas reposant sur elle.

Lors du passage en phase de remise en température, l'électrovanne 27, disposée sur la ou les branches 24m alimentant le réseau froid des platines 9m, est commandée dans le sens de sa fermeture et, simultanément, le collier chauffant 37 (ou réistances) est alimenté en courant électrique. La chaleur dégagée par ce dernier se transmet à l'huile thermique contenue dans le répartiteur 30 et, par les tronçons 14a, aux conduits en boucle 14 disposés dans les platines 9m. Cette montée en température est progressive jusqu'à obtention d'une température optimale dans chacune des platines. Un ou plusieurs capteurs disposés dans les platines 9m interviennent sur le boitier de régulation 28 commandant l'alimentation de la résistance électrique 37 pour ajuster cette température. La paroi 10 de chaque platine 9m est ainsi amenée à une température homogène qui se transmet, intégralement et par les plots 38, au récipient 8 reposant sur elle. Il en résulte que, en aucun cas, les mets contenus dans ce récipient risquent d'être soumis localement à un excès de température favorisant leur accrochage au fond du récipient ou détériorant leur qualité gustative.

Lors de la remise en température la couche isolante 19 s'oppose à la transmission de la chaleur vers le réseau de refroidissement de la même platine mais aussi vers le plateau-repas 5 sous jacent. Quand à la transmission par rayonnement 29 en direction des platines 9f voisines et situées au même niveau dans l'armoire, elle est limitée par l'aménagement d'espaces entre ces platines.

Un tel dispositif de remise en température, qui a été décrit ci dessus dans le cas de son application à une armoire de conservation de plateaux-repas, peut bien entendu être mis en oeuvre dans un trolley utilisé pour servir les plateaux-repas dans un avion. Dans ce cas, l'inertie thermique du fluide thermique qui continue à fournir des calories alors même que les moyens de chauffe ont été déconnectés électriquement, est mise à profit pour maintenir les mets en température pendant le déplacement du chariot et pendant la distribution des plateaux repas.

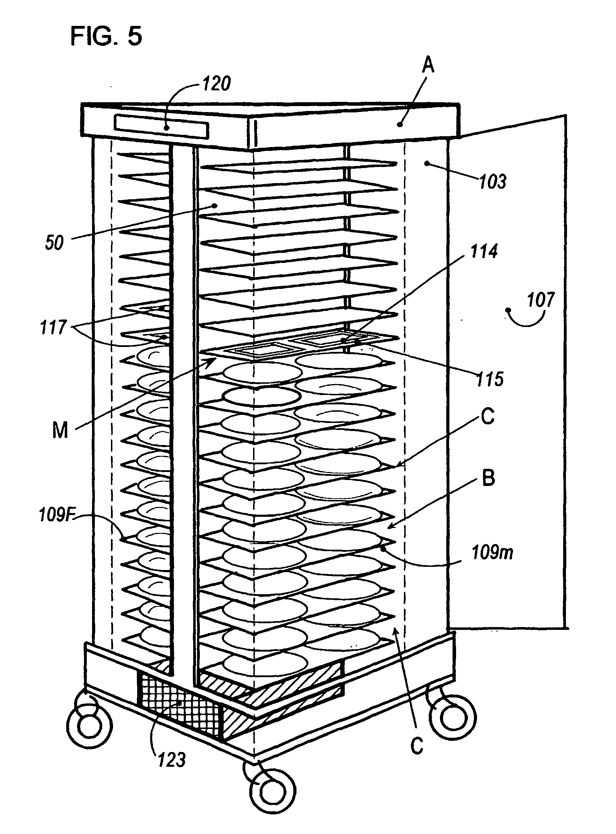

La figure 5 montre l'application de l'invention à un chariot traiteur pour le service à l'assiette. Dans la description qui suit les éléments communs aux deux installations porteront la même référence majorée de 100, tandis que les éléments nouveaux seront référencs à partir de 50.

Sagissant d'une structure destinée à conserver des aliments, d'abord en chambre froide, puis, pendant le déplacement sur le lieu de consommation et, enfin, dans l'attente du service, le compartiment de conservation C n'est pas équipé de parois 103 et de portes 107 isothermiques, par contre son compartiment supérieur A contenant la réserve de froid 120 est isolé. L'alimentation de cette dernière est assurée par tous moyens, et par exemple par l'évaporateur d'un groupe frigorifique 123. Les circuits de refroidissement et de remise en température sont similaires à ceux décrits précédemment et sont disposés dans la paroi centrale isolante 50 séparant le chariot en une zone froide F et une zone mixte M, contenant chacune des étagères 109f ou 109m.

Ces étagères peuvent être identiques à celles décrites précédemment mais, de préférence, sont constitués directement par les boucles 114, 115 et 117 formés par les conduits des réseaux de refroissement et de remise en température, chaque boucle 114 étant disposée à l'intérieur de la boucle 115 et en contact, comme elle, avec le fond du récipient, en général une assiette. Dans la forme représentée, chaque étagère peut recevoir deux assiettes.

Avec ce chariot, le traiteur peut, de façon habituelle, assurer à l'atelier ses préparations, puis le stocker en chambre froide. Le jour de consommation, il met en fonctionnement le groupe frigorifique 123 pour charger la réserve en froid afin qu'elle diffuse pendant le transport. A l'arrivée, il peut reconnecter le groupe 123 pour la conservation des entrées et des desserts disposés dans la zonz froide F et, simultanément, lancer dans la zone mixte M la remise en température des plats chauds.

La figures 6 représente une vue d'ensemble d'un côté d'une armoire de conservation mobile au moyen des roues 39, tandis que la figure 7 représente aussi une vue d'ensemble d'un autre côté de l'armoire montrant une double capacité de plateaux-repas avec double introduction de part et d'autre de l'armoire par les portes 7a et 7b.

Dans ces deux figures, l'armoire comporte toutes les particularités décrites précédemment et spécifiquement figure 1. Toutefois, la vue des différents côtés de l'armoire ne permet pas de décrire tous les conduits. Le circuit de froid comprend, dans le compartiment supérieur A de l'armoire, la réserve 20 contenant le fluide caloporteur, et l'évaporateur 22 du groupe frigorifique 23, reliés entre eux par les conduits 22a et 22b. De la réserve 20 partent les branches 24f et 24m (non représenté) de ce circuit de refroidissement, branches allant aux platines froides 9f et mixtes 9m. La branche 24f est raccordée aux tronçons 17a et les tronçons 17r sont raccordés à la branche de retour 25 avec pompe électrique 26. Le collecteur vertical de chauffe 30 est raccordé aux tronçons 14a et 14r. Il s'étend entre le réservoir 32, sa pompe 33 et la soupape 35.

Toutefois, les formes, les dispositions ainsi que les moyens mis en oeuvre pour la réalisation du dispositif qui vient d'être décrit, pourront varier dans la limite des équivalents.

## Revendications

1. Dispositif de remise en température d'aliments, à double circuit de fluide chaud et froid, pour récipients ou plateaux-repas (5) disposés dans une installation de conservation, installation comprenant, une enceinte avec deux compartiments superposés et isolés thermiquement l'un de l'autre, à savoir un compartiment supérieur (A), formant réserve de froid, et un compartiment inférieur de conservation (B) muni d'étagères (C) de réception de récipients ou de plateaux-repas (5) et divisé en zones froides (F), assurant exclusivement la conservation par le froid, et en zones mixtes (M), aptes à assurer, successivement, la conservation par le froid et la remise en température des mets de certains récipients, chacune de ces zones comportant un circuit de refroidissement relié à la réserve de froid (A), tandis que chaque zone mixte (M) comporte également un circuit de remise en température associé à des moyens de réchauffage électriques et que le circuit de refroidissement alimentant les zones mixtes comprend une électrovanne (25) se fermant en phase de réchauffage, **caractérisé en ce que** le circuit de remise en température des zones mixtes (M) est rempli d'huile thermique et comprend un répartiteur vertical (30), dont la partie supérieure est munie d'un vase d'expansion (34) et dont la partie inférieure est associée aux moyens de chauffage électrique (37), tandis que le circuit de maintien en froid (24f, 24m) est rempli par un mélange aqueux, de glycol ou équivalent, et comprend une réserve (20), disposée dans le compartiment supérieur (A) et contenant l'évaporateur (22) d'une installation frigorifique (23), cette réserve (20) communiquant, avec le circuit d'alimentation des réseaux froids (14, 14a, 14r) alimentant la zone mixte, par un circuit (24m) équipé de l'électrovanne d'arret (27) se fermant en phase de remise en température, sous la commande d'un boitier de régulation et de contrôle (28).

2. Dispositif de remise en température selon la revendication 1 **caractérisée en ce que** chaque étagère (C) de réception, d'un plateau repas (5) est composée de deux platines indépendantes (9f, 9m), dont l'une est dite froide et l'autre dite mixte, ces platines étant réalisées en matériau conducteur de la chaleur et supportées par des structures indépendantes et non conductrices de la chaleur, chaque platine mixte (9f) comprenant une paroi supérieure (10) et une paroi inférieure (12) séparées par une couche de matériau d'isolation thermique (19), couche séparant également, d'une part, la boucle (15) d'un réseau tubulaire inférieur rélié au circuit de refroidissement et disposé au contact de la paroi inférieure (12) de la platine et près de sa périphérie, et d'autre part, la boucle (14) d'un réseau tubulaire relié au circuit de remise en température et disposé au contact de la paroi supérieure (10) de la platine et dans sa partie centrale, tandis que la platine froide voisine (9f) comporte, contre la face inférieure de son unique paroi (11), une boucle (17) formée par un réseau tubulaire relié au circuit de refroidissement.

3. Dispositif de remise en température selon la revendication 1 **caractérisé en ce que** les moyens de chauffage du circuit (30) de remise en température sont constitués par un collier électrique chauffant (37) ou par immersion de résistances dans de l'huile thermique entourant un tronçon inférieur du répartiteur (30) et ce circuit (30, 14a, 14,14r, 31) est associé à une pompe de circulation (32), ne fonctionnant que lors de la remise en température.

4. Dispositif de remise en température selon la revendication 2, **caractérisé en ce que** chacune des platines froide ou mixte (9f, 9m) comprend, en saillie de la face inférieure de sa paroi supérieure plane, au moins une gouttière (13, 16, 18) de positionnement des conduits (14, 15, 17), respectivement du réseau froid ou du réseau de remise en température.

5. Dispositif de remise en température selon l'une quelconque des revendications 1 à 4 **caractérisé en ce que** chaque plateau (5) est en matériau isolant thermiquement et comporte, dans son fond, des plots (38) en matériau conducteur de la chaleur mettant en communication thermique le fond des récipients (8) contenant les mets avec la paroi (11 ou 10) de la platine (9f, 9m) sur laquelle il repose.

6. Dispositif de remise en température selon la revendication 2 **caractérisé en ce que** le circuit de refroidissement (24f et 24m) allant de la réserve (20) aux platines (9f, 9m) par des branches (24f et 24m) et revenant à la réserve (20) par une branche de retour (25) comprend sur l'une de ses branches une pompe de circulation (26).

7. Dispositif de remise en température selon la revendication 1 **caractérisé en ce que**, les étagères (C) du compartiment de conservation (B) sont réparties en colonnes, respectivement, froide et mixte, séparées par une cloison isolante (50) et chacune des étagères (C) de la colonne mixte comprend une ou plusieurs boucles (114) formées par les conduits d'un réseau tubulaire intérieur, relié au circuit de refroidissement , et une ou plusieurs boucles extérieures(115), entourant les premières boucles (114) et faisant partie d'un réseau tubulaire de remise en température, ces boucles venant directement en contact avec les assiettes ou récipient (108).

## Patentansprüche

1. Vorrichtung zur Erwärmung von Lebensmitteln mit doppeltem Flüssigkeitskreislauf für Wärme und Kälte für Behälter oder Speiseteller (5), die in einer Aufbewahrungsanlage angeordnet sind, wobei die Anlage eine Umschließung mit zwei übereinander angeordneten und voneinander thermisch isolierten Abteilungen aufweist, nämlich eine obere Abteilung (A), welche eine Kältekammer ausbildet, und eine untere Aufbewahrungsabteilung (B), die mit Regalen (C) zum Aufnehmen von Behältern oder Speisetellern (5) versehen und in Kältezonen (F) aufgeteilt ist, welche ausschließlich die Aufbewahrung durch Kälte sicherstellen, und in gemischte Zonen (M), die geeignet sind, nacheinander die Aufbewahrung durch Kälte und die Erwärmung der Inhalte bestimmter Behälter zu gewährleisten, wobei jede der Zonen einen Kältekreislauf umfaßt, der mit der Kältekammer (A) verbunden ist, während jede gemischte Zone (M) ebenfalls einen Erwärmungskreislauf umfaßt, der mit elektrischen Erwärmungsmitteln verbunden ist und wobei der Abkühlungskreislauf, der die gemischten Zonen versorgt, ein Magnetventil (25) umfaßt, das sich in der Erwärmungsphase schließt, **dadurch gekennzeichnet, daß** der Erwärmungskreislauf der gemischten Zonen (M) mit Thermoöl gefüllt ist und einen vertikalen Verteiler (30) umfaßt, dessen oberer Abschnitt mit einem Ausdehnungsgefäß (34) ausgestattet ist und dessen unterer Abschnitt mit elektrischen Erwärmungsmitteln (37) verbunden ist, während der Kreislauf zur Kälteaufrechterhaltung (24f, 24m) mit einem wässerigen Gemisch aus Glykol oder Gleichwertigem gefüllt ist und eine Kammer (20) umfaßt, die in der oberen Abteilung (A) angeordnet ist und den Verdampfer (22) einer Kühlanlage (23) enthält, wobei die Kammer (20) mit dem Kreislauf zur Versorgung der Kältenetze (14, 14a, 14r), welche die gemischte Zone versorgen, über einen Kreislauf (24m) verbunden ist, der mit einem Sperr-Magnetventil (27) ausgestattet ist, das sich in der Phase der Erwärmung gemäß der Steuerung eines Regelungs- und Steuerungsgehäuses (28) schließt.

2. Vorrichtung zur Erwärmung nach Anspruch 1, **dadurch gekennzeichnet, daß** jedes Regal (C) zur Aufnahme eines Speisetellers (5) aus zwei unabhängigen Platten (9f, 9m) besteht, von denen eine als kalt und die andere als gemischt bezeichnet wird, wobei die Platten aus einem wärmeleitenden Material hergestellt sind und von unabhängigen und nicht-wärmeleitenden Strukturen getragen werden, wobei jede gemischte Platte (9f) eine obere Wand (10) und eine untere Wand (12) umfaßt, die durch eine Schicht aus einem wärmeisolierenden Material (19) getrennt sind, wobei die Schicht auch einerseits die Schleife (15) eines rohrförmigen unteren Netzes, das mit dem Abkühlungskreislauf verbunden und in Kontakt mit der unteren Wand (12) der Platte und nahe ihres Umfangs angeordnet ist, und andererseits die Schleife (14) eines rohrförmigen Netzes voneinander trennt, das mit dem Erwärmungskreislauf verbunden und in Kontakt mit der oberen Wand (10) der Platte und in ihrem mittleren Abschnitt angeordnet ist, während die benachbarte kalte Platte (9f) gegen die untere Seite ihrer einzigen Wand (11) eine Schleife (17) umfaßt, die durch ein rohrförmiges Netz ausgebildet ist, das mit dem Abkühlungskreislauf verbunden ist.

3. Vorrichtung zur Erwärmung nach Anspruch 1, **dadurch gekennzeichnet, daß** die Erwärmungsmittel des Erwärmungskreislaufs (30) aus einem elektrischen erwärmenden Ring (37) gebildet sind oder durch Eintauchen von Widerständen in Thermoöl, welches einen unteren Abschnitt des Verteilers (30) umgibt, und **dadurch**, daß der Kreislauf (30, 14a, 14, 14r, 31) mit einer Zirkulationspumpe (32) verbunden ist, die nur während der Erwärmung in Betrieb ist.

4. Vorrichtung zur Erwärmung nach Anspruch 2, **dadurch gekennzeichnet, daß** sowohl die kalte als auch die gemischte Platte (9f, 9m), von der unteren Seite ihrer oberen ebenen Wand vorstehend, mindestens eine Rinne (13, 16, 18) zum Positionieren der Leitungen (14, 15, 17) des Kältenetzes bzw. des Erwärmungsnetzes umfaßt.

5. Vorrichtung zur Erwärmung nach einem der Ansprüche 1 bis 4, **dadurch gekennzeichnet, daß** jeder Teller (5) aus einem wärmeisolierenden Material besteht und in seinem Boden Kontakte (38) aus einem wärmeleitenden Material umfaßt, welche den Boden der Behälter (8), in denen sich die Inhalte befinden, mit der Wand (11 oder 10) der Platte (9f, 9m), auf welcher der Boden angeordnet ist, in Wärmeverbindung bringen.

6. Vorrichtung zur Erwärmung nach Anspruch 2, **dadurch gekennzeichnet, daß** der Abkühlungskreislauf (24f und 24m), der von der Kammer (20) bis zu den Platten (9f, 9m) über Verzweigungen (24f und 24m) verläuft und zur Kammer (20) über eine Rückkehrverzweigung (25) zurückkehrt, auf einer seiner Verzweigungen eine Zirkulationspumpe (26) umfaßt.

7. Vorrichtung zur Erwärmung nach Anspruch 1, **dadurch gekennzeichnet, daß** die Regale (C) der Aufbewahrungsabteilung (B) in eine kalte und eine gemischte Reihe aufgeteilt sind, die durch eine isolierende Zwischenwand (50) voneinander getrennt sind und daß jedes der Regale (C) der gemischten Reihe eine oder mehrere Schleifen (114), die durch die Leitungen eines inneren rohrförmigen Netzes ausgebildet sind, das mit dem Abkühlungskreislauf verbunden ist, und eine oder mehrere äußere Schleifen (115) umfaßt, welche die ersten Schleifen (114) umgeben und Teil eines rohrförmigen Erwärmungsnetzes sind, wobei die Schleifen direkt mit den Tellern oder dem Behälter (108) in Kontakt kommen.

## Claims

1. A device for re-thermalizing food stuffs, with a dual hot and cold fluid circuit, for containers or meal trays (5) positioned in a conservation facility, a facility comprising a chamber with two superimposed compartments thermally insulated from each other, i.e., an upper compartment (A), forming a cold reserve, and a lower conservation compartment (B) provided with shelves (C) for receiving containers or meal trays (5) and divided into cold areas (F), exclusively providing cold conservation, and mixed areas (M), capable of successively providing cold conservation and re-thermalization of dishes of certain containers, each of these areas including a cooling circuit connected to the cold reserve (A) while each mixed area (M) also includes a thermalization circuit associated with electrical heating means and the cooling circuit feeding the mixed areas comprises a solenoid valve (25) which closes during the heating phase, **characterized in that** the circuit for thermalizing the mixed areas (M) is filled with thermal oil and comprises a vertical distributor (30), the upper portion of which is provided with an expansion vessel (34) and the lower portion of which is associated with electrical heating means (37), while the refrigeration circuit (24f, 24m) is filled with an aqueous mixture of glycol or equivalent, and comprises a storage (20), positioned in the upper compartment (A) and containing the evaporator (22) of a refrigerating facility (23), this storage (20) communicating with the circuit for feeding cold networks (14, 14a, 14r) feeding the mixed area, through a circuit (24m) equipped with the stop solenoid valve (27) which closes in the thermalization phase, under the control of a monitoring and control box (28).

2. The thermalization device according to claim 1, **characterized in that** each shelf (C) for receiving a meal tray (5) consists of two independent plates (9f, 9m), one of which is said to be cold, and the other is to be mixed, these plates are made in heat conducting material and supported by independent and non-heat conducting structures, each mixed plate (9f) comprising an upper wall (10) and a lower wall (12) separated by a layer of heat insulation material (19), a layer also separating the loop (15) of a lower tubular network connected to the cooling circuit and positioned in contact with the lower wall (12) of the plate and near its periphery, on the one hand, and on the other hand, the loop (14) of a tubular network connected to the thermalization circuit and positioned in contact with the upper wall (10) of the plate, and in its central portion, while the neighbouring cold plate (9f) includes, against the lower face of its unique wall (11) a loop (17) formed by a tubular network connected to the cooling circuit.

3. The thermalization device according to claim 1, **characterized in that** the means for heating the thermalization circuit (30) are formed by a heating electrical collar (37) or by immersion of resistors in the thermal oil surrounding a lower section of the distributor (30) and this circuit (30, 14a, 14, 14r, 31) is associated with a circulation pump (32), which only operates during thermalization.

4. The thermalization device according to claim 2, **characterized in that** each of the cold or mixed plates (9f, 9m) comprises, protruding from the lower face of its upper planar wall, at least one gutter (13, 16, 18) for positioning the conduits (14, 15, 17) of the cold network or the thermalization network respectively.

5. The thermalization device according to any of claims 1 to 4, **characterized in that** each tray (5) is in a heat insulating material and includes in its bottom, pads (38) in heat conducting material putting the bottom of the containers (8) containing the dishes in thermal communication with the wall (11 or 10) of the plate (9f, 9m) on which it rests.

6. The thermalization device according to claim 2, **characterized in that** the cooling circuit (24f and 24m) extending from the storage (20) to the plates (9f, 9m) through branches (24f and 24m) and extending back to the storage (20) by a return branch (25), comprises a circulation pump (26) on one of these branches.

7. The thermalization device according to claim 1, **characterized in that** the shelves (C) of the conservation compartment (B) are distributed in cold and mixed columns, respectively, separated by an insulating partition (50) and each of the shelves (C) of the mixed column comprises one or more loops (114) formed by the conduits of the interior tubular network, connected to the cooling circuit, and one or more external loops (115), surrounding the first loops (114) and being part of a tubular thermalization network, these loops directly coming into contact with the plates or the container (108).
